# EUROPEAN PATENT APPLICATION

(11) **EP 4 684 958 A1**
(43) Date of publication of application: **28.01.2026**
(21) Application number: 25190502.2
(22) Date of filing: 18.07.2025
(51) Int. Cl.: B32B 17/10, B32B 3/02, G02F 1/13

(54) **METHOD FOR MANUFACTURING SMART WINDOW AND SMART WINDOW MANUFACTURED BY THE METHOD**

(30) Priority: 22.07.2024 KR 20240096727; 22.04.2025 KR 20250052176
(71) Applicant: Dongwoo Fine-Chem Co., Ltd., Iksan-si, Jeollabuk-do 54631 (KR)
(72) Inventor: JUNG, Joon-Mo, 54631 Iksan-si (KR); SONG, Seung-Won, 54631 Iksan-si (KR)
(74) Representative: Betten & Resch

(57) **Abstract**

Disclosed are a method for manufacturing a smart window and a smart window manufactured thereby. The method includes: a step of laminating a film laminate including an optical laminate, an adhesive layer, and a substrate; a pre-bonding step; and a main bonding step, wherein the main bonding step includes: step a) of maintaining a laminate resulting from the pre-bonding step at a pressure of 3.5 to 10 bar for 15 to 60 minutes; and step b) of maintaining a laminate resulting from step a) at a reduced pressure of 1 bar to 3 bar for 70 to 100 minutes. According to the disclosure, the unevenness of the pressure applied to the liquid crystal layer during glass bonding may be eliminated, thereby manufacturing a smart window in which the uneven distribution of liquid crystals does not occur.

## Description

### BACKGROUND

### 1. Technical Field

The present disclosure relates to a method for manufacturing a smart window and a smart window manufactured by the method.

### 2. Related Art

In general, there are many cases in which an external light blocking coating is applied to a glass window of a means of transportation such as a vehicle. However, the transmittance of a conventional glass window of a means of transportation is fixed, and the transmittance of the external light blocking coating is also fixed. Therefore, the overall transmittance of the conventional window of the means of transportation is fixed, which may cause an accident. For example, when the overall transmittance is preset low, there is no problem during day when ambient light is sufficient. However, there is a problem in that it is difficult for a driver or the like to properly check the surroundings of the means of transportation at night when ambient light is insufficient. Alternatively, when the overall transmittance is preset high, there is a problem of causing glare to a driver or the like during day when ambient light is sufficient. Accordingly, a transmittance variable optical laminate capable of changing the transmittance of light when a voltage is applied has been developed.

The transmittance variable optical laminate is driven to change transmittance by driving liquid crystals in response to application of a voltage. The transmittance variable optical laminates developed to date are manufactured by forming a conductive layer for driving liquid crystals on a separate substrate and then combining the conductive layer with other elements such as a polarizing plate.

For example, Japanese Patent Application Publication No. 2018-010035 discloses a transmittance variable optical laminate including a transparent conductive layer formed on a polycarbonate (PC) substrate having a predetermined thickness. In the case of a smart window with variable transmittance, a liquid crystal layer must be included for variable functions, and a process of bonding to glass is finally performed However, when conventional technology is applied, there is a problem in that the uneven distribution of liquid crystals is likely to occur because of the fluidity of liquid crystals as the liquid crystal layer included in the optical laminate is pressed during the process of bonding glass during the manufacturing process, and thus liquid crystal mura that was not visible before glass bonding occurs in a final manufactured smart window. Furthermore, in the case of a thinner optical laminate, especially in the case of an optical laminate including a structure in which a polarizing plate and a conductive layer are in direct contact without including a substrate therebetween, liquid crystal mura due to glass bonding pressure is more likely to occur. Therefore, there is a need to develop a transmittance variable optical laminate, which has a structure that can minimize the pressure applied to a liquid crystal layer and in which liquid crystal mura does not occur even after glass bonding, through a bonding method that can eliminate uneven pressure.

### [Prior Art Documents]

### [Patent Documents]

(Patent Document 1) Japanese Patent Application Publication No. 2018-010035

### SUMMARY

The present disclosure has been made in order to solve the above-described problem, and an object of the present disclosure is to provide a method for manufacturing a smart window having excellent quality and appearance, in which a main bonding process of bonding a substrate to a film laminate includes two or more steps, thereby eliminating the unevenness of the pressure applied to a liquid crystal layer in an optical laminate during substrate bonding so that liquid crystal mura does not occur even after substrate bonding.

Another object of the present disclosure is to provide a method for manufacturing a smart window, in which a main bonding process of bonding a substrate to a film laminate is performed in two or more sequential steps at different pressures, thereby being able to suppress liquid crystal mura that may occur in a display, especially liquid crystal mura that is likely to occur in an optical laminate manufactured such that a polarizing plate and a conductive layer are in direct contact without including a substrate therebetween.

Still another object of the present disclosure is to provide a method for manufacturing a smart window including a film laminate further including a gap layer having optimal properties and structure for protecting a liquid crystal layer.

Yet another object of the present disclosure is to provide a method for manufacturing a smart window including a film laminate further including a surface protective layer having optimal properties and structure for protecting a liquid crystal layer.

Still yet another object of the present disclosure is to provide a smart window which, by including an optical laminate manufactured without including a separate substrate for forming a conductive layer, has a significantly reduced thickness compared to a conventional optical laminate.

A further object of the present disclosure is to provide a smart window including the film laminate, and a transportation means, a wearable device, or a window for a building using the same.

However, the objects of the present disclosure are not limited to the objects mentioned above, and other objects not mentioned will be clearly understood by those skilled in the art from the following description.

The present disclosure relates to a method for manufacturing a smart window, including:
a step of laminating a film laminate including an optical laminate, an adhesive layer, and a substrate; a pre-bonding step; and a main bonding step, wherein the main bonding step includes: step a) of maintaining a laminate resulting from the pre-bonding step at a pressure of 3.5 to 10 bar for 15 to 60 minutes; and step b) of maintaining a laminate resulting from step a) at a reduced pressure of 1 bar to 3 bar for 70 to 100 minutes.

In the present disclosure, steps a) and b) may be performed at a temperature of 50 to 110°C.

In the present disclosure, step a) may be performed at a pressure of 3.5 to 6 bar.

In the present disclosure, step b) may be performed at a pressure of 1 to 2 bar.

In the present disclosure, the pre-bonding step may be performed at a pressure of 0.1 to 3 bar and may include: step S1) of heating to 40 to 90°C; step S2) of maintaining the temperature of S1); and step S3) of cooling to 0 to 30°C.

In the present disclosure, the method may further include a step of manufacturing a film laminate including an optical laminate, wherein the step of manufacturing the film laminate may include a step of forming a gap layer at ends of the optical laminate.

In the present disclosure, the gap layer may have a storage modulus (G') of 10³ to 10⁶ kPa at 60°C and a storage modulus (G') of 5×10² to 5×10³ kPa at 100°C, and may be formed to have a thickness larger than that of the optical laminate.

In the present disclosure, the step of manufacturing the film laminate may include a step of laminating a surface protective layer on at least one of the upper and lower surfaces of the optical laminate.

In the present disclosure, the surface protective layer may be a low-temperature curable polyvinyl butyral (PVB) film that is cured at a temperature of 90°C or lower, and may have a tensile modulus (E') of 10⁸ to 10¹⁰ Pa at 60°C and 10⁶ to 10⁷ Pa at 90°C.

In the present disclosure, the surface protective layer may include a polyvinyl butyral (PVB) film which has no flowability at 100°C or lower under a load of 21.6 kg, and has a melt flow rate (MFR) of 0.02 g/10 min or less, as measured according to ASTM D1238 at 140°C under a load of 2.16 kg.

The present disclosure provides a smart window manufactured by the above-described manufacturing method, wherein the smart window includes an optical laminate, wherein the optical laminate includes a first polarizing plate; a first transparent conductive layer formed on an inner surface of the first polarizing plate; a second polarizing plate opposite to the first polarizing plate; a second transparent conductive layer formed on an inner surface of the second polarizing plate and opposite to the first transparent conductive layer; a liquid crystal layer provided between the first transparent conductive layer and the second transparent conductive layer; and an alignment film formed between the transparent conductive layer and the liquid crystal layer, wherein at least one of the first transparent conductive layer and the second transparent conductive layer is formed in direct contact with the first polarizing plate or the second polarizing plate.

According to the method for manufacturing a smart window according to the present disclosure, a main bonding process of bonding a substrate to the film laminate includes two or more steps that are performed at different pressures to minimize the pressure the pressure applied to the liquid crystal layers, and thus the film laminate, adhesive layer, and substrate are gradually bonded, so that the unevenness of the pressure applied to the liquid crystal layer during glass bonding may be eliminated, so that the uneven distribution of liquid crystals may not occur and thus occurrence of liquid crystal mura may be prevented, thereby manufacturing a smart window having an excellent appearance.

In addition, according to the method for manufacturing a smart window according to the present disclosure, it is possible to manufacture a film laminate which, by further including a surface protective layer having optimal properties and structure for protecting a liquid crystal layer, significantly suppresses liquid crystal mura that may occur in a display.

In addition, according to the method for manufacturing a smart window according to the present disclosure, it is possible to manufacture a film laminate which, by further including a gap layer having optimal properties and structure for protecting a liquid crystal layer, significantly suppresses liquid crystal mura that may occur in a display.

In addition, according to the method for manufacturing a smart window according to the present disclosure, a film laminate may have a significantly reduced thickness compared to a conventional film laminate by including an optical laminate manufactured without including a separate substrate for forming a conductive layer.

Using the film laminate according to the present disclosure, it is possible to provide a smart window in which liquid crystal mura does not occur, and a transportation means, a wearable device, or a window for a building using the same.

### BRIEF DESCRIPTION OF THE DRAWINGS

FIG. 1 is a process flow diagram showing a method for manufacturing a smart window according to one embodiment of the present disclosure.
FIGS. 2a and 2b schematically show the structure of a smart window according to one embodiment of the present disclosure.
FIGS. 3 schematically shows the structure of an optical laminate according to one embodiment of the present disclosure.
FIGS. 4a to 4f are photographs of smart windows of Examples 1 to 6 of the present disclosure on backlight plates (light sources), respectively, taken using a digital camera to evaluate the appearance thereof.
FIGS. 5a and 5b are photographs of smart windows of Comparative Examples 1 and 2 of the present disclosure on backlight plates (light sources), respectively, taken using a digital camera to evaluate the appearance thereof.
FIGS. 6a and 6d are photographs of smart windows of Reference Examples 1 to 4 of the present disclosure on backlight plates (light sources), respectively, taken using a digital camera to evaluate the appearance thereof.

### DETAILED DESCRIPTION

The present disclosure relates to a method for manufacturing a smart window and a smart window manufactured thereby. The method for manufacturing a smart window includes: a step of laminating a film laminate including an optical laminate, an adhesive layer, and a substrate; a pre-bonding step; and a main bonding step, wherein the main bonding step includes an at least two-step process. Specifically, the main bonding step includes: step a) of maintaining a laminate resulting from the pre-bonding step at a pressure of 3.5 to 10 bar for 15 to 60 minutes; and step b) of maintaining a laminate resulting from step a) at a reduced pressure of 1 bar to 3 bar for 70 to 100 minutes. As the main bonding step includes two or more steps that are performed at different pressures, a film laminate, an adhesive layer, and a substrate may be gradually bonded, so that the unevenness of the pressure applied to the liquid crystal layer during glass bonding may be eliminated and thus the uneven distribution of liquid crystals may not occur, so that the occurrence of liquid crystal mura in the smart window may be prevented.

The optical laminate 10 of the present disclosure is particularly suitable for technical fields where the transmittance of light can be changed in response to the application of voltage, and may be used, for example, for a smart window.

The term "smart window" means an optical structure that controls the amount of light or heat passing therethrough by changing light transmittance in response to the application of an electrical signal. In other words, the smart window is configured to be changed into a transparent, opaque or translucent state by voltage and is also called variable transmittance glass, light control glass, or smart glass.

The smart window may be used as a partition for partitioning the internal space of a vehicle or a building or as a partition for privacy, and may be used as a skylight window arranged at an opening of a building. Furthermore, the smart window may be used as highway signs, notice boards, score boards, clocks or advertisement screens, and may be used to replace windows of vehicles, buses, airplanes, ships, or trains, or glass of means of transportation, such as a sunroof.

The optical laminate of the present disclosure may also be used for the smart window in the various technical fields mentioned above, but since a transparent conductive layer 21, 22 is directly formed on a polarizing plate 11, 12, the optical laminate does not include a separate substrate for forming the transparent conductive layer, and thus has a small thickness and is favorable in terms of flexural properties so that the optical laminate may be particularly suitable for use for a smart window for a vehicle or a building. In one or more embodiments, a smart window having applied thereto the transmittance variable optical laminate of the present disclosure may be used as a front window, a rear window, a side window, and a sunroof window of an automobile, or a window for a building, and in addition to being used to block external light, may also be used for partitioning the internal space of an automobile or a building, or for protecting privacy, such as being used as an internal partition. In addition, the smart window may also be used for wearable devices such as helmets, glasses, or watches.

Hereinafter, embodiments of the present disclosure will be described in more detail with reference to the accompanying drawings. However, the following drawings attached to the present specification illustrate preferred embodiments of the present disclosure, and serve to aid in further understanding of the technical idea of the present disclosure together with the contents of the present disclosure described above. Therefore, the present disclosure should not be interpreted as being limited only to matters described in the drawings.

Terms used in the present specification are for purpose of describing embodiments and are not intended to limit the present disclosure. In the present specification, singular forms also include plural forms unless the context clearly indicates otherwise. For example, the term "polarizing plate" as used herein may mean at least one of a first polarizing plate and a second polarizing plate, and the term "transparent conductive layer" may mean at least one of a first transparent conductive layer and a second transparent conductive layer.

As used herein, terms such as "comprise", "comprising", "include", and "including" are intended to denote the existence of one or more stated components, steps, operations, and/or elements, but do not exclude the probability of existence or addition of one or more other components, steps, operations, and/or elements. Throughout the specification, like reference numerals refer to like components.

Spatially relative terms, such as "below", "lower surface", "beneath ", "above", "upper surface", "on" and the like, may be used to easily describe the relationship between one element or component(s) and other element or components(s) as illustrated in the figures. Spatially relative terms should be understood to encompass different orientations of the element in use or operation, in addition to the orientation depicted in the figures. For example, when elements illustrated in the figures are turned over, an element described as being "below" or "beneath" another element may be placed "above" the other element. Thus, the exemplary term "below" may include both the terms "above" and "below". The element may also be oriented in a different direction, and thus spatially relative terms may be interpreted according to the orientation.

As used herein, the term "plane direction" may be interpreted as a direction orthogonal to the polarizing plate and/or the transparent conductive layer, that is, the direction of the user's view.

As used herein, the term "substantially" may be interpreted to include not only physically completely identical or identical, but also being within the error range in the measurement or manufacturing process, and for example, may be interpreted to mean a range of error of 5% or less.

### Method for Manufacturing Smart Window

The present disclosure relates to a method for manufacturing a smart window, which is intended to prevent the occurrence of mura in the smart window. Specifically, the mura is caused by the optical laminate, and more specifically, the mura may be caused by pressing of the liquid crystal layer included in the optical laminate during a process of bonding substrate (glass) to the laminate in the smart window manufacturing process. In particular, in the case of a thinner optical laminate, such mura is more likely to occur, which becomes a fatal problem that lowers the quality of the display. Accordingly, the present disclosure provides a manufacturing method capable of effectively manufacturing an excellent smart window even in a case where liquid crystal mura due to substrate bonding pressure is more likely to occur, for example, the case of an optical laminate manufactured such that a polarizing plate and a conductive layer are in direct contact with each other without including a substrate therebetween.

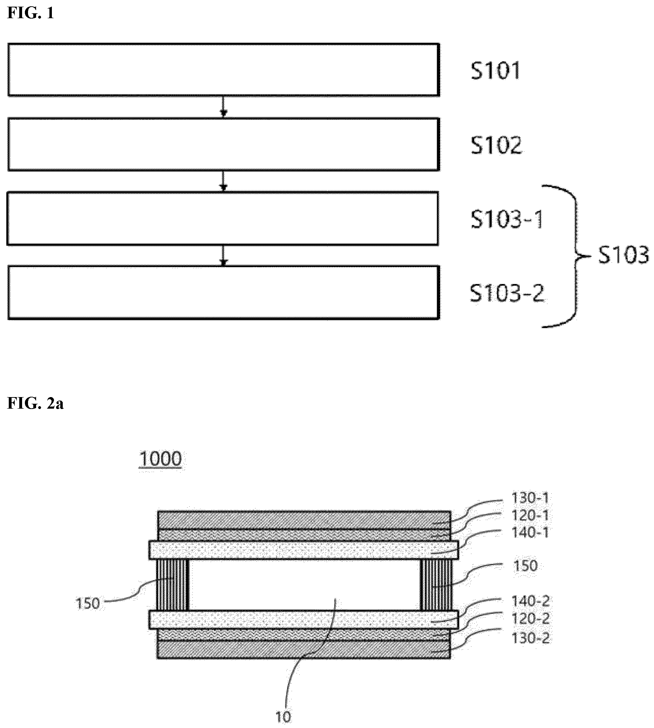

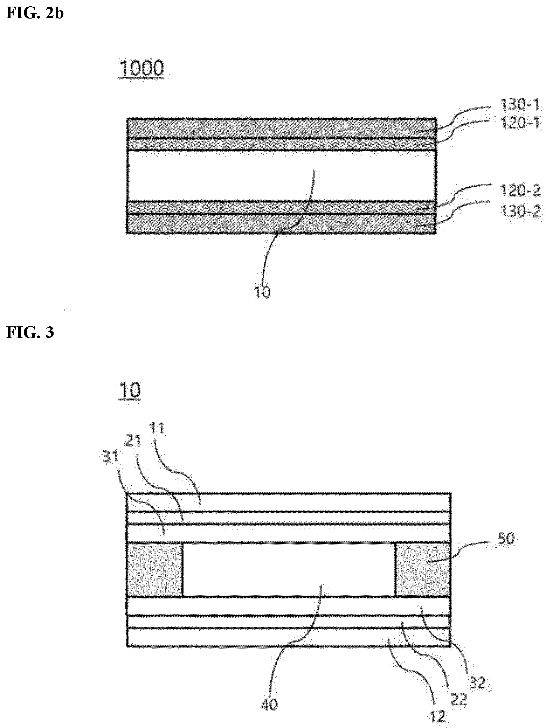

FIG. 1 is a process flow diagram showing a method for manufacturing a smart window according to one embodiment of the present disclosure, and FIGS. 2a and 2b schematically show the structure of a smart window 1000 according to one embodiment of the present disclosure.

Referring to FIGS. 1 and 2a and 2b, a method for manufacturing a smart window according to one embodiment of the present disclosure includes: step (S101) of laminating a film laminate, an adhesive layer, and a substrate; step (S102) of subjecting the laminate of the film laminate, the adhesive layer, and the substrate to pre-bonding; and step (S103) of subjecting the laminate resulting from the pre-bonding to main bonding. In one embodiment of the present disclosure, main bonding step (S103) includes an at least two-step process, including: a) step (S103-1) of maintaining a laminate resulting from step (S102) at a pressure of 3.5 to 10 bar for 15 to 60 minutes; and b) step (S103-2) of maintaining a laminate resulting from step (S103-1) at a reduced pressure of 1 to 3 bar for 70 to 100 minutes. In addition, the method for manufacturing a smart window according to the present disclosure may further include, before step (S101) of laminating a film laminate, an adhesive layer, and a substrate, step (S100) of manufacturing the film laminate including an optical laminate.

### <Step (S100) of Manufacturing Film Laminate Including Optical Laminate>

The present disclosure may include a step of manufacturing a film laminate including an optical laminate.

A film laminate manufactured through step (S100) may refer to the optical laminate 10 itself, or may refer to the optical laminate 10 further including a gap layer 150 and/or a surface protective layer 40. For example, as shown in FIG. 2a, the film laminate of the present disclosure may mean a laminate including the optical laminate 10 having laminated thereon the gap layer 150, and the surface protective layer 140.

In one embodiment of the present disclosure, referring to FIG. 2a, the film laminate may be configured to include the gap layer 150 as a pillar at both lateral ends of the optical laminate 10 and further include the surface protective layer 140-1, 140-2 on at least one surface of the optical laminate 10. In the film laminate, the surface protective layers 140-1 and 140-2 may be disposed to be opposite to each other and spaced apart from each other at a predetermined distance by the gap layer 150 formed to surround the outer periphery of the optical laminate 10, and the optical laminate is provided in the space defined by the surface protective layers 140-1 and 140-2 and the gap layer 150.

In the present disclosure, the step of manufacturing a film laminate may include a step of manufacturing an optical laminate and/or a step of forming a gap layer at ends of the optical laminate.

### Step of Manufacturing Optical Laminate 10

Hereinafter, the step of manufacturing the optical laminate of the present disclosure will be described in detail, but the scope of the present disclosure is not limited thereto

Specifically, in one embodiment of the present disclosure, the step of manufacturing the optical laminate may include steps: step (p1) of preparing a first polarizing plate; step (p2) of forming a first transparent conductive layer on a transparent substrate; step (p3) of forming a second transparent conductive layer on a second polarizing plate; step (p4) of forming a liquid crystal layer by coating the second transparent conductive layer with a composition for forming a liquid crystal layer; step (p5) of performing bonding such that the first transparent conductive layer of step (p2) is in contact with the liquid crystal layer of step (p4); and step (p6) of bonding the first polarizing plate prepared in step (p1) to the transparent substrate of the step (p5). Steps (p1) to (p5) may be partially omitted, combined, or performed in a changed order as needed in the scope that does not impair the purpose of the present disclosure.

After step (p5), the first polarizing plate prepared in step (p1) is laminated with the second polarizing plate so that their respective absorption axes are orthogonal to each other. For example, the absorption axis of the second polarizing plate may be 0°, and the absorption axis of the first polarizing plate may be 90°. In this case, arranging the absorption axes of the first polarizing plate and the second polarizing plate perpendicular to each other when viewed from above may be advantageous for improving the range of transmittance variation between the light transmission mode (ON) and the light-blocking mode (OFF) of the smart window according to the driving of liquid crystals.

FIG. 3 shows the structure of the optical laminate 10 according to one embodiment of the present disclosure. Referring to FIG. 3, in one embodiment of the present disclosure, the optical laminate 10 may include: a first polarizing plate 11; a first transparent conductive layer 21 formed on an inner surface of the first polarizing plate; a second polarizing plate 12 opposite to the first polarizing plate 11; a second transparent conductive layer 22 formed on an inner surface of the second polarizing plate 12 and opposite to the first transparent conductive layer 21; a liquid crystal layer 40 provided between the first transparent conductive layer 21 and the second transparent conductive layer 22; and an alignment film 31, 32 formed between the transparent conductive layer 21, 22 and the liquid crystal layer 40. In addition, the optical laminate may further include at least one selected from the group consisting of a pressure-sensitive adhesive layer, an adhesive layer, a UV-absorbing layer, and/or a hard coating layer (not shown). In addition, the optical laminate may further include a sealant 50 at ends of the liquid crystal layer to secure a space in which the liquid crystal layer is to be provided.

The optical laminate 10 according to one embodiment of the present disclosure includes a polarizing plate 11, 12, a transparent conductive layer 21, 22, and a liquid crystal layer 40. The optical laminate 10 according to one embodiment of the present disclosure may be a transmittance variable optical laminate whose total transmittance may be changed in response to the voltage applied. For example, the optical laminate 10 may have a total transmittance of 0.1 to 45% in response to the voltage applied.

The polarizing plate 11, 12 may include a polarizer and a protective layer formed on at least one surface of the polarizer, and two different polarizing plates 11 and 12 may be positioned on both surfaces of the liquid crystal layer 40. When the polarizing plates 11 and 12 are positioned on both surfaces of the liquid crystal layer 40, the angle formed between the absorption axes of the two different polarizing plates may be vertical or horizontal, and may preferably be 5 to 85° in order to ensure minimum transmittance. The polarizing plate transmits polarized light in one direction, and it is possible to control the transmittance of the optical laminate by controlling the amount of light passing therethrough using the polarization properties of the polarizing plate. The protective layer may be a member for protecting the polarization properties of the polarizer from post-processing and external environments. In one embodiment, the protective layer may serve to provide a structural base on which a transparent conductive layer 21, 22 described below may be formed. In this case, it is preferable that the protective layer has a characteristic that facilitates the formation of the transparent conductive layer thereon.

The protective layer may be present only on one surface of the polarizer, or may also be provided on both surfaces of the polarizer. When the polarizing plate 11, 12 includes a plurality of protective layers, the two different protective layers may include substantially the same or similar materials. In one or more embodiments, examples of the material of the protective layer may include polyester-based resins such as polyethylene terephthalate, polyethylene isophthalate, polyethylene naphthalate, and polybutylene terephthalate; cellulose-based resins such as diacetyl cellulose and triacetyl cellulose; polycarbonate-based resins; polyethylene-based resins; polypropylene-based resin; acrylic resins such as polymethyl methacrylate or polyethyl methacrylate; and cyclic olefin polymers (COPs).

The polarizer of the polarizing plate 11 may include a stretched polarizer or may be provided as a stretched polarizing plate. In one embodiment, the stretched polarizer may include a stretched polyvinyl alcohol (PVA)-based resin. The polyvinyl alcohol (PVA)-based resin may be a polyvinyl alcohol-based resin obtained by saponifying a polyvinyl acetate-based resin. Examples of the polyvinyl acetate-based resin include polyvinyl acetate, which is a homopolymer of vinyl acetate, as well as copolymers of vinyl acetate and other monomers copolymerizable therewith. Examples of the other monomers include unsaturated carboxylic acid-based monomers, unsaturated sulfonic acid-based monomers, olefin-based monomers, vinyl ether-based monomers, acrylamide-based monomers having an ammonium group, and the like. In addition, the polyvinyl alcohol (PVA)-based resin may include a modified resin, for example, aldehyde-modified polyvinyl formal or polyvinyl acetal.

In addition, the polarizing plate 11 may include a coated polarizer. In one embodiment, the coated polarizer may be formed by a liquid crystal coating composition, and may be formed, for example, by applying the liquid crystal coating composition onto the upper surface of the protective layer. Here, the liquid crystal coating composition may include a reactive liquid crystal compound and a dichroic dye.

The reactive liquid crystal compound may include a reactive mesogen (RM) capable of exhibiting liquid crystal properties, and/or a monomer molecule including a polymerizable end functional group and having a liquid crystal phase after a crosslinking reaction by heat or light. When the reactive liquid crystal compound is polymerized by light or heat, a polymer network may be formed while maintaining the liquid crystal arrangement. By using the reactive liquid crystal compound, it is possible to form a thin film polarizer with improved mechanical and thermal stability while maintaining the optical anisotropy and dielectric constant characteristics of the liquid crystal.

The dichroic dye is a component included in the liquid crystal coating composition to impart polarization properties, and has different absorbances in the major and minor axis directions of the molecule. The dichroic dye may be a conventional or later-developed dichroic dye, and examples thereof include acridine dyes, oxazine dyes, cyanine dyes, naphthalene dyes, azo dyes, and anthraquinone dyes, which may be used alone or in combination.

The liquid crystal coating composition may further include a solvent capable of dissolving the reactive liquid crystal compound and the dichroic dye, and examples of the solvent include propylene glycol monomethyl ether acetate (PGMEA), methyl ethyl ketone (MEK), xylene, and chloroform. In addition, the liquid crystal coating composition may further include a leveling agent, a polymerization initiator, and the like, within a range that does not impair the polarization properties of the coating film.

In addition, the polarizing plate 11 may be formed to include an member having alignment properties, and may be fabricated by applying and curing an alignment film coating composition containing a polymer having alignment properties, a photopolymerization initiator, and a solvent onto the protective layer to form the member having alignment properties, and then applying and curing the liquid crystal coating composition onto the member. The polymer having alignment properties is not particularly limited, but may be a polyacrylate-based resin, a polyamic acid resin, a polyimide-based resin, a polymer containing a cinnamate group, or the like. In addition, a conventional or later-developed polymer capable of exhibiting alignment properties may be used.

The polarizing plate 11 included in the optical laminate may further include a functional coating layer such as an overcoat layer and/or an optical functional layer to improve the surface hardness of the polarizer and the polarizing plate. In one or more embodiments, the polarizing plate 11 may further include at least one selected from the group consisting of a protective layer, a retardation matching layer, and/or a refractive index-matching layer (not shown).

Specifically, in one embodiment, the polarizing plate may further include an overcoat layer as a type of functional coating layer. For example, the polarizing plate may be positioned on the upper surface of the layer formed by the liquid crystal coating composition, and may be provided to face the member having alignment properties. In some embodiments, a protective film may further be provided on the upper surface of the overcoat layer. In this case, the polarizing plate may have a laminated structure consisting of the member having alignment properties - the layer formed by the liquid crystal coating composition - the overcoat layer - the protective film, and thus the mechanical durability thereof may be further improved while maintaining the transmittance at a certain level.

The polarizing plate 11 may include an optical functional layer to improve the optical properties of the optical laminate. The optical functional layer may be provided on at least one surface of the protective layer, and for example, may be provided on the upper surface of the protective layer. The optical functional layer is not particularly limited as long as it serves to reinforce or supplement the optical function of the polarizing plate 11. For example, the optional functional layer may be a retardation film such as a quarter-wave plate or a half-wave plate to retard the phase of light passing through the liquid crystal layer, and these plates may be used alone or in combination. The retardation film may be manufactured to include an obliquely stretched resin film, a liquid crystal coating layer, etc., and a conventional or later-developed retardation film may be used.

In one embodiment, the polarizing plate 11, 12 may have a thickness of 30 to 200 µm, preferably 30 to 170 µm, more preferably 50 to 150 µm. In this case, it is possible to manufacture an optical laminate having a small thickness while maintaining the optical properties of the polarizing plate 11, 12.

The polarizing plate 11 may include a curved shape to manufacture an optical laminate having a curved surface, and for example, may be formed in a shape curved toward one of the two different polarizing plates 11 laminated on both surfaces of the liquid crystal layer 40.

The refractive index-matching layer (not shown) is provided to compensate for the transmittance difference of the optical laminate caused by the transparent conductive layer 21, 22 described below, and may serve to improve the viewing characteristics, etc. by reducing the refractive index difference. Furthermore, the refractive index-matching layer may be provided to correct the color caused by the transparent conductive layer 21, 22. Meanwhile, when the transparent conductive layer 21, 22 has a pattern, the refractive index-matching layer may compensate for the difference in transmittance between a pattern region with the pattern formed and a non-pattern region where no pattern is formed.

Specifically, the transparent conductive layer 21, 22 is laminated adjacent to other members having a refractive index different therefrom (for example, a polarizer, etc.), and the difference in the refractive index between the transparent conductive layer and other layer adjacent thereto may lead to the difference in light transmittance. In particular, if a pattern is formed on the transparent conductive layer, a problem may arise in that the pattern region and the non-pattern region are viewed to be distinguishable from each other. Therefore, the refractive index-matching layer may be provided to compensate for refractive index, thereby reducing the difference in light transmittance of the optical laminate. In particular, when a pattern is formed on the transparent conductive layer, the refractive index-matching layer prevents the pattern region and the non-pattern region from being viewed to be distinguishable from each other. The refractive index of the refractive index-matching layer may be preset to be higher than the refractive index of the protective layer of the polarizing plate 11, 12 and lower than or equal to the refractive index of the transparent conductive layer 21, 22. The refractive index may be appropriately selected depending on the materials of the polarizing plate 11, 12 and the transparent conductive layer 21, 22, but is preferably 1.4 to 2.6, more preferably 1.4 to 2.4. When the refractive index-matching layer is set to have a predetermined refractive index as described above, it is possible to prevent light loss caused by a sharp difference in refractive index between the polarizing plate 11, 12 and the transparent conductive layer 21, 22. The refractive index-matching layer is not particularly limited as long as it can prevent the sharp difference in refractive index between the polarizing plate and the transparent conductive layer.

The transparent conductive layer 21, 22 may be formed on one surface of the polarizing plate 11, 12, and preferably, may be formed in direct contact with the polarizing plate 11, 12.

The transparent conductive layer 21, 22 is provided for driving the liquid crystal layer 40. In one embodiment, at least one of the first transparent conductive layer 21 and the second transparent conductive layer 22 may be formed in direct contact with the first polarizing plate 11 or the second polarizing plate 12. For example, as shown in FIG. 1, the first transparent conductive layer 21 and the second transparent conductive layer 22 may be formed in direct contact with the first polarizing plate 11 and the second polarizing plate 12, respectively.

Conventionally, an optical laminate used to manufacture a smart window, etc. is manufactured by forming a conductive layer for driving liquid crystals on one surface of a substrate and bonding the other surface of the substrate to a polarizing plate. However, the optical laminate according to the present disclosure is characterized in that, since the conductive layer is directly formed on one surface of the polarizing plate without including a separate substrate for forming the conductive layer, the laminate has improved transmittance in a light transmission mode and improved flexural properties while having a reduced thickness.

"The transparent conductive layer is formed in direct contact with the polarizing plate 11, 12" means that the transparent conductive layer 21, 22 shares a contact surface with the polarizing plate and is provided on the polarizing plate without a separate substrate. For example, the transparent conductive layer 21, 22 may be formed by deposition on the upper surface of the protective layer formed on the polarizing plate 11, 12.

In one embodiment, the transparent conductive layer 21, 22 may be formed by direct deposition on one surface of the polarizing plate 11, 12. In this case, the transparent conductive layer 21, 22 may be formed in direct contact with a pretreated surface of the polarizing plate 11, 12 after performing pre-treatment such as corona treatment or plasma treatment on one surface of the polarizing plate 11, 12 in order to improve the adhesion thereof to the polarizing plate 11, 12. The pre-treatment is not limited to corona treatment or plasma treatment, and may be performed using any conventional or later-developed pre-treatment process within a range that does not impair the purpose of the present disclosure.

In another embodiment, the transparent conductive layer may be formed on one surface of the polarizing plate with a highly adhesive layer interposed therebetween in order to improve the adhesion between the transparent conductive layer and the polarizing plate.

The transparent conductive layer 21, 22 preferably has a visible light transmittance of 50% or more, and for example, may include at least one selected from the group consisting of a transparent conductive oxide, a metal, a carbonaceous material, a conductive polymer, a conductive ink, and nanowires, without being limited thereto, and a conventional or later-developed transparent conductive layer material may be used.

In one or more embodiments, the transparent conductive oxide may include at least one selected from a group consisting of indium tin oxide (ITO), indium zinc oxide (IZO), indium zinc tin oxide (IZTO), aluminum zinc oxide (AZO), gallium zinc oxide (GZO), fluorine tin oxide (FTO), zinc oxide (ZnO), and the like. Furthermore, the metal may include at least one selected from a group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), and alloys containing at least one of these metals, and may include, for example, a silver-palladium-copper (APC) alloy or a copper-calcium (CuCa) alloy. The carbonaceous material may include at least one selected from the group consisting of carbon nanotubes (CNTs), graphene, and the like. The conductive polymer may include at least one conductive polymer selected from the group consisting of polythiophene, poly(3,4-ethylenedioxythiophene), polyaniline, polyacetylene, polydiacetylene, polyphenylene, polyphenylene vinylene, polyphenylene sulfide, polythienylene vinylene, polythiophene vinylene, polyfluorene, polypyrrole, poly(3,4-ethylenedioxythiophene): polystyrene sulfonate, poly(3,4-ethylenedioxythiophene): camphor sulfonic acid, poly(3,4-ethylenedioxythiophene): toluene sulfonic acid, poly(3,4-ethylenedioxythiophene): dodecylbenzene sulfonic acid, polyaniline: polystyrene sulfonate, polyaniline: camphorsulfonic acid, polypyrrole: polystyrene sulfonate, polypyrrole: camphorsulfonic acid, polypyrrole: toluenesulfonic acid, polypyrrole: dodecylbenzene sulfonic acid, polythiophene: polystyrene sulfonate, polythiophene: camphorsulfonic acid, polythiophene: toluenesulfonic acid, and polythiophene: dodecylbenzene sulfonic acid. The conductive ink may be an ink composed of a mixture of metal powder and a curable polymeric binder, and the nanowires may be, for example, silver nanowires (AgNWs). In one embodiment of the present disclosure, the transparent conductive layer preferably includes a conductive polymer such as polyethylenedioxythiophene (PEDOT).

The transparent conductive layer may be formed, for example, by a deposition process such as chemical vapor deposition (CVD), physical vapor deposition (PVD), or plasma-enhanced chemical vapor deposition (PECVD), a printing process such as screen printing, gravure printing, reverse offset printing, or ink jet printing, or a dry or wet plating process. Furthermore, the transparent conductive layer 21, 22 may be formed to have a structure consisting of two or more layers by combining the above-described materials. For example, in order to reduce the reflectivity of incident light and increase the transmittance, the transparent conductive layer may be formed to have a two-layer structure including a metal layer and a transparent conductive oxide layer.

In one embodiment, a surface of each of the first transparent conductive layer 21 and the second transparent conductive layer 22, which is in contact with the liquid crystal layer 40, may be oriented by rubbing. Unlike the case of a transparent conductive layer including a metal component, a certain groove may be formed on the surface of the transparent conductive layer 21, 22 including the conductive polymer according to the present disclosure, thereby aligning the liquid crystal compound in the liquid crystal layer in a desired position and direction. In this case, the transparent conductive layer 21, 22 may serve not only as an electrode for driving the liquid crystal layer but also as an alignment film, and a separate alignment film is not included, and thus it is possible to manufacture an optical laminate having a smaller thickness and to simplify the manufacturing process.

In order to provide the rubbing-oriented transparent conductive layer 21, 22, a rubbing method using a rubbing process and a photo-alignment method using UV light may be used. In general, the photo-alignment method has lower surface anchoring energy than the rubbing method, and thus a surface of the transparent conductive layer 21, 22 of the present disclosure, which is in contact with the liquid crystal layer 40, is preferably oriented by rubbing using the rubbing method.

The liquid crystal layer 40 is characterized by being driven in response to an electric field. The liquid crystal layer 40 may be positioned between the first and second polarizing plates 11 and 12 located in the light control region of the optical laminate 10. In one embodiment, the liquid crystal layer 40 may be positioned within a space defined by a sealant 50 and a spacer (not shown) between the first and second polarizing plates 11 and 12 in the light control region, or a space defined by a sealant 50 and a spacer (not shown) between the first and second alignment films 31 and 32. In addition, the liquid crystal layer 40 may control the transmittance of light incident from an external light source in response to an electric field formed between the first and second transparent conductive layers 21 and 22.

In one or more embodiments, the liquid crystal layer 40 may be driven in any one driving mode selected from the group consisting of a twisted nematic (TN) mode, a super-twisted nematic (STN) mode, an in-plane switching (IPS) mode, a fringe field switching (FFS) mode, a plane line switching (PLS) mode, an advanced high-performance IPS (AH-IPS) mode, a polymer sustained alignment (PSA) mode, and a vertical alignment (VA) mode, and a conventional or later-developed liquid crystal driving mode may be applied.

According to another embodiment of the present disclosure, the liquid crystal layer 40 may include at least one spacer selected from the group consisting of a ball spacer and a column spacer, and is particularly preferably a ball spacer. The ball spacer may include one or more ball spacers, and preferably has a diameter of 1 to 10 µm. In addition, when viewed in a planar direction, the area occupied by the ball spacer in the liquid crystal layer 40 (that is, the light control region) is preferably 0.01 to 10% of the area of the liquid crystal layer 40 in terms of user's visibility and improved transmittance in the light transmission mode.

The alignment film 31, 32 may have substantially the same properties as those described above with respect to the member having alignment properties, and is not particularly limited as long as it serves to align the liquid crystal compound. Preferably, the alignment film 31, 32 may include a photo-alignable or photo-curable polymer, etc. For example, the alignment film 31, 32 may be formed by applying and curing an alignment film coating composition including a photo-alignable or photo-curable polymer, a photopolymerization initiator, and a solvent. For example, the alignment film may be formed by applying an alignment material such as polyimide and then subjecting the applied material to a rubbing process.

The sealant 50 serves to combine two different polarizing plates, and may be positioned in an inactive region between the two different polarizing plates. In addition, the sealant 50, together with a spacer, may define a space where the liquid crystal layer is to be provided between the two different polarizing plates. In addition, since the sealant is present at the ends of the liquid crystal layer, the pressure applied to the liquid crystal layer during the glass bonding process described later may be further reduced. Here, the thickness of the sealant is not limited.

The sealant 50 may include a curable resin as a base resin. As the base resin, a UV-curable resin or thermosetting resin known in the art to be usable for a sealant may be used. The UV-curable resin may be a polymer of a UV-curable monomer. The thermosetting resin may be a polymer of a thermosetting monomer. The thermosetting resin may be a polymer of a thermosetting monomer.

As the base resin of the sealant 50, for example, an acrylate-based resin, an epoxy-based resin, a urethane-based resin, a phenol-based resin, or a mixture of these resins may be used. In one embodiment, the base resin may be an acrylate-based resin, wherein the acrylate-based resin may be a polymer of an acrylic monomer. The acrylic monomer may be, for example, a multifunctional acrylate. In another embodiment, the sealant may further include a monomer component in addition to the base resin. The monomer component may be, for example, a monofunctional acrylate. As used herein, the term "monofunctional acrylate" may mean a compound having one acrylic group, and the term "multifunctional acrylate" may mean a compound having two or more acrylic groups. The curable resin may be cured by UV irradiation and/or heating. The UV irradiation or heating may be appropriately performed under conditions that do not impair the purpose of the present application. If necessary, the sealant may further include an initiator, for example, a photoinitiator or a thermal initiator.

The method for manufacturing the optical laminate of the present disclosure is not particularly limited as long as it is a method for realizing the optical laminate described above. For example, the transparent conductive layer 21, 22 and the refractive index-matching layer (not shown) may be formed by a deposition or coating method commonly used in the field. For example, these layers may be formed using an appropriate process selected from among coating processes such as a spin coating process, a roller coating process, a bar coating process, a dip coating process, a gravure coating process, a curtain coating process, a die coating process, a spray coating process, a doctor coating process, and a kneader coating process; printing processes such as a screen printing process, a spray printing process, an inkjet printing process, a relief printing process, an intaglio printing process, a flat printing process, etc.; and vacuum deposition processes such as chemical vapor deposition (CVD), physical vapor deposition (PVD), plasma-enhanced chemical vapor deposition (PECVD), and sputtering.

The optical laminate of the present disclosure may have a thickness of 0.300 mm to 0.450 mm. In general, in the case of an optical laminate having a thickness within the above range, the effect of pressure during glass bonding is more prominent due to the excessively small thickness, and thus mura is more likely to occur. However, in the case of a smart window manufactured to include an optical laminate having the above-described thickness using the manufacturing method of the present disclosure, the occurrence of liquid crystal mura may be significantly suppressed.

Preferably, the optical laminate of the present disclosure may have a thickness of 0.32 to 0.40 mm. When the thickness of the optical laminate is within the above range, a gap layer including a polyvinyl butyral (PVB) film described later may be formed to have a thickness larger than that of the optical laminate.

### Step of Manufacturing Film Laminate

The present disclosure relates to a method for manufacturing a smart window having excellent quality and appearance, in which a main bonding process of bonding a substrate to the film laminate includes two or more steps, thereby eliminating the unevenness of the pressure applied to applied to a liquid crystal layer in an optical laminate during substrate bonding so that liquid crystal mura does not occur even after substrate bonding. Specifically, as shown in FIG. 2a, the film laminate may further include a gap layer 150 and/or a surface protective layer 140-1, 140-2.

For example, the gap layer and the surface protective layer are intended to suppress stain and/or mura caused by the optical laminate. More specifically, the stain and/or mura may be caused by pressing of the liquid crystal layer included in the optical laminate during a process of bonding glass to the laminate in the smart window manufacturing process. In particular, in the case of a thinner optical laminate, such mura is more likely to occur, which becomes a fatal problem that lowers the quality of the display. Accordingly, the present disclosure provides a method for manufacturing a film laminate, which may effectively manufacture an excellent smart window even in a case where liquid crystal mura due to glass bonding pressure is more likely to occur, for example, the case of an optical laminate manufactured such that a polarizing plate and a conductive layer are in direct contact with each other without including a substrate therebetween. More preferably, it is preferable to include a gap layer 150 at ends of the optical laminate 10 and a surface protective layer 140-1, 140-2 in terms of minimizing the pressure applied to the liquid crystal layer.

Hereinafter, a step of laminating a surface protective layer and a step of forming a gap layer at ends of the optical laminate of the present disclosure will described in detail, without being limited thereto.

### Step of Laminating Surface Protective Layer 140-1,140-2

As the surface protective layer, a surface protective layer having a relatively small thickness may be laminated on one or both surfaces of the optical laminate (i.e., POL CELL), thereby reducing defects caused by bonding pressure during the bonding process and preventing the uneven distribution of liquid crystals, which may occur due to uneven pressure applied to the liquid crystal layer, thereby solving the problem of liquid crystal mura. For example, when one or more ultra-thin polyvinyl butyral (PVB) films are additionally provided between the adhesive layer, included for bonding an existing optical laminate to a substrate such as glass and/or preventing the shattering of glass (substrate), and the optical laminate, the ultra-thin polyvinyl butyral (PVB) film(s) is/or more effective in preventing damage caused by external physical pressure, such as pressing of the optical laminate and/or liquid crystals of the optical laminate. This is a characteristic that can be obtained by eliminating the uneven distribution of liquid crystals (liquid) caused by movement to one side during bonding under pressure, due to the properties of the polyvinyl butyral (PVB) film that hardens by curing at a relatively low temperature.

For this purpose, in the present disclosure, a low-temperature curable polyvinyl butyral (PVB) film, characterized by having a thickness of 0.01 mm to 0.35 mm and being cured at a temperature of 90°C or lower, is applied as the surface protective layer 140-1, 140-2. In particular, a polyvinyl butyral (PVB) thin film having a thickness of 0.05 mm may preferably be applied. The low-temperature curable polyvinyl butyral (PVB) film has an advantage in that it may be cured at a low temperature of 90°C or lower, preferably 60°C to 90°C, thereby ensuring the adhesion between the adhesive layer used for glass bonding and the polyvinyl butyral (PVB) film, and in particular, minimizing the pressure applied to the liquid crystal layer when applied to a display and/or display device having a thin liquid crystal layer. In addition, the polyvinyl butyral (PVB) film has an advantage in that it can absorb the pressure applied to the liquid crystal layer in the optical laminate during bonding because it has a soft characteristic at the substrate (glass) bonding temperature of 60 to 90°C, which will be described later. If the bonding temperature is lower than 60°C, bonding does not proceed well, and if the bonding temperature is higher than 90°C, thermal damage to the polarizing plate may occur.

The surface protective layer may include a low-temperature curable polyvinyl butyral (PVB) film having a tensile modulus (E') of 10⁸ to 10¹⁰ Pa, 10⁶ to 10⁷ Pa at 90°C, preferably 10⁹ Pa at 60°C, or 10⁶ Pa at 90°C. A film having a tensile modulus (E') within the above range has an advantage of being able to more effectively reduce damage to the optical laminate caused by high pressure.

The low-temperature curable polyvinyl butyral (PVB) film included in the surface protective layer may have no flowability at 100°C or lower under a load of 21.6 kg, and may have a melt mass-flow rate (MFR) of 0.02 g/10 min or less as measured according to ASTM D1238 at 140°C under a load of 2.16 kg. The MFR is a standard property value obtained by measuring the mass of a thermoplastic material passing through a die with specified dimensions and characteristics at a specified temperature under a predetermined load within 10 minutes, and serves as a criterion for evaluating the processability of a resin. Specifically, the MFR is a measure of the ease of melt flow of a thermoplastic polymer, and is also called melt flow rate or melt flow index (MFI). It is measured by a standard test method according to ASTM D1238 and/or ISO 1133, and is defined as the mass of resin that flows out in a molten state through an orifice under the temperature and load conditions defined in the standard for 10 minutes. Melt viscosity is significantly dependent on molecular weight, and thus the higher the molecular weight, the more entanglement and the higher the melt viscosity. Here, it is preferable to select, as the film to be included in the surface protective layer, a material that has processability by exhibiting a melt flow rate (MFR) sufficient to enable easy forming, and at the same time, is capable of having sufficient mechanical strength considering that it will be included in the final product.

The polyvinyl butyral (PVB) film included in the surface protective layer of the present disclosure has low-temperature curing properties, provides cross-linking reactivity without using high heat, and may maintain the transparency of the coating layer. In addition, since high heat is not used during curing of the film, degeneration of other elements laminated such as resins bonded may be prevented.

Table 1 below is a table showing the results of measuring the melt flow rate (MFR) of a polyvinyl butyral (PVB) film with a thickness of 0.05 mm, included in a surface protective layer according to one embodiment of the present disclosure, measured according to ASTM D1238.

**[Table 1]**

| Film grade | MFR (g/10 min) | |
|---|---|---|
| | Condition 1 | Condition 2 |
| | (100°C and 21.6 kg) | (140°C and 2.16 kg) |
| Thin Film (D 0.05 mm) | not flow | 0.02 |

Referring to Table 1 above, the polyvinyl butyral (PVB) thin film had no flowability under the conditions of 100°C temperature and 21.6 kg load, but was measured to have a melt flow rate of 0.02 g/10 min or less under the conditions of 140°C temperature and 2.16 kg load. That is, the polyvinyl butyral (PVB) film included in one embodiment of the present disclosure preferably includes one thin film having a thickness of about 0.05 mm or a laminate of two or more films, each having a thickness of about 0.05 mm, since it exhibits curability at a relatively low temperature and requires excellent structural performance in a high temperature range. The total area of the surface protective layer is preferably greater than 100% of the area of the optical laminate, which is in contact with the surface protective layer, in terms of forming a sealant 50. More preferably, the total area may be 101 to 150% of the area of the optical laminate.

### Step of Forming Gap Layer 150

The method for manufacturing the film laminate of the present disclosure may further include a step of forming a gap layer 150 at ends of the optical laminate 10. Specifically, in one embodiment of the present disclosure, the step of forming the gap layer at ends of the optical laminate of the present disclosure may include a step of providing a polyvinyl butyral (PVB) film to have a thickness larger than that of the optical laminate.

In the present disclosure, in order to form the gap layer to have a thickness larger than that of the optical laminate, specifically, after the total thickness of the optical laminate is measured, the gap layer may be fabricated by placing a polyvinyl butyral (PVB) film on the optical laminate to a thickness larger than the measured thickness, and then performing pre-bonding and main bonding steps.

In the present disclosure, the gap layer is formed in a pillar shape at ends of the optical laminate for the purpose of minimizing the pressure directly applied to the liquid crystal layer in the optical laminate, and is characterized by being larger than the thickness of the optical laminate to achieve the above purpose. For example, preferably, the thickness of the gap layer may be 101 to 120% of the thickness of the optical laminate. If the thickness of the gap layer is larger than the upper limit of the above range, the gap layer may interfere with the bonding between the optical laminate, the surface protective layer, and the substrate, resulting in black spots and manufacturing defects.

In one embodiment of the present disclosure, the gap layer may have a storage modulus (G') of 10³ to 10⁶ kPa at 60°C and a storage modulus (G') of 5×10² to 5×10³ kPa at 100°C, without being limited thereto. When the storage modulus is within the above range, the gap layer may relieve the stress applied during subsequent substrate bonding in the manufacture of a smart window, thereby reducing mura of the liquid crystal layer. In addition, there is an advantage in that the gap layer is cured even at low temperatures and serves as a pillar, thereby minimizing the pressure applied to the optical laminate. More specifically, even if the gap layer is designed to be thicker than the optical laminate, if only a resin having hard properties is used, defects may occur in the subsequent substrate bonding step. On the other hand, even if the gap layer is designed to be thicker than the optical laminate, if only a resin having soft properties is used, the gap layer may not be able to sufficiently relieve the pressure applied to the optical laminate in the subsequent substrate bonding step. Therefore, the gap layer preferably has a storage modulus within the above range, and may include a low-temperature curable polyvinyl butyral (PVB) film if the gap layer has a storage modulus within the above range and has a thickness larger than the thickness of the optical laminate. Although the type of low-temperature curable polyvinyl butyral (PVB) film is not limited, the low-temperature curable polyvinyl butyral (PVB) film included in the surface protective layer described above may preferably be applied as is.

The low-temperature curable polyvinyl butyral (PVB) film is curable at a temperature of 90°C or lower, without being thereto. For example, the gap layer includes two or more low-temperature curable polyvinyl butyral (PVB) films, wherein the low-temperature curable polyvinyl butyral films are curable at a temperature of 90°C or lower, without being limited thereto. When a low-temperature curable polyvinyl butyral (PVB) film is included, it has an advantage of being able to absorb the pressure applied to the liquid crystal layer in the optical laminate during bonding, because it has soft properties at the substrate (glass) bonding temperature of 60 to 90°C, which will be described later. If the bonding temperature is lower than 60°C, bonding does not proceed well, and if the bonding temperature is higher than 90°C, thermal damage to the polarizing plate may occur.

The film laminate of the present disclosure may satisfy a sufficient storage modulus capable of absorbing pressure by laminating a layer including the low-temperature curable polyvinyl butyral (PVB) film and/or controlling the number of layers to be laminated by controlling the type and thickness of polyvinyl butyral (PVB) film to be included.

Preferably, in one embodiment of the present disclosure, the gap layer may consist of a plurality of layers including two or more films. In one embodiment of the present disclosure, the gap layer may include a plurality of polyvinyl butyral (PVB) films. Specifically, polyvinyl butyral (PVB) is an elastic material, and thus when it is included in an optical laminate for manufacturing a smart window, the temperature and pressure applied during the bonding process may cause damage to the optical laminate including the liquid crystal layer, which may cause defects such as uneven liquid crystal distribution and liquid crystal mura. Therefore, in the film laminate according to the present disclosure, a gap layer having a thickness larger than that of the optical laminate is formed. In order to form a gap layer having a thickness larger than that of the optical laminate and capable of appropriately relieving the pressure applied during bonding, a single 0.38-mm-thick polyvinyl butyral (PVB) film alone generally used in a conventional art is not sufficient, and thus a plurality of polyvinyl butyral (PVB) films (thin films) may be laminated.

More preferably, the gap layer may include a film characterized by having a tensile modulus (E') of 10⁸ to 10¹⁰ at 60°C and 10⁶ to 10⁷ at 90°C, and preferably may include a polyvinyl butyral (PVB) film satisfying the above tensile modulus (E'), particularly a 0.05-mm-thick PVB film. When the polyvinyl butyral (PVB) film satisfying the above tensile modulus (E') is included, there is an advantage in that a gap layer including a high-hardness polyvinyl butyral (PVB) film and having a thickness larger than that of the optical laminate may be formed, which may more effectively reduce damage to the optical laminate caused by high pressure. In addition, impact resistance may be imparted to a smart window manufactured by laminating a substrate later. According to a particularly preferred embodiment of the present disclosure, a gap layer thicker than the optical laminate and having a preferable storage modulus may be formed by laminating only 2 to 8 polyvinyl butyral (PVB) films (thin films), each having a thickness of 0.05 mm, which are the same as described above with respect to the polyvinyl butyral (PVB) film of the surface protective layer 40, in terms of having excellent structural performance such as processability and strength.

Meanwhile, in the present disclosure, the gap layer may further include a 0.38-mm-thick polyvinyl butyral (PVB) film having a thermal conductivity of 0.2 W/mK. When a polyvinyl butyral (PVB) film satisfying the above thermal conductivity is included, a gap layer including a soft polyvinyl butyral (PVB) film and having a thickness larger than that of the optical laminate may be formed, thereby facilitating bonding. Specifically, with regard to the storage modulus of the gap layer described above, if the gap layer is excessively hard, a problem may arise in that it is difficult to achieve substantial bonding because the gap layer is not sufficiently pressed when bonding the surface protective layer and/or the substrate to the optical laminate later. According to one embodiment of the present disclosure, when the thickness of the optical laminate is 0.39 mm, a gap layer thicker than the optical laminate and having a preferable storage modulus may be formed by laminating a 0.38-mm-thick polyvinyl butyral (PVB) film that satisfies the above-described thermal conductivity together with a 0.05-mm-thick polyvinyl butyral (PVB) film that satisfies the-above-described tensile modulus. The thermal conductivity is collected and measured at 23°C and 50°C by a thermal constants analyzer using a transient plane source (TPS) method.

Meanwhile, in the present disclosure, the gap layer may further include a 0.38-mm-thick polyvinyl butyral (PVB) film having a specific heat of 1.9 to 2.3 kJ/(kg·K). The specific heat was measured by a differential scanning calorimeter (DSC).

In addition, the 0.38-mm-thick polyvinyl butyral (PVB) film having a thermal conductivity of 0.2 W/mK and/or the 0.38-mm-thick polyvinyl butyral (PVB) film having a specific heat of 1.9 to 2.3 kJ/(kg·K) may have a visible light transmittance of 88.8% or more, and more preferably have/has a UV transmittance of 0.6% or less. When the polyvinyl butyral (PVB) film satisfies the above conditions, the polyvinyl butyral (PVB) film may block UV light when included in a smart window, thereby improving the quality of the smart window.

In the present disclosure, the polyvinyl butyral (PVB) film included in the gap layer may be the same as that in the surface protective layer and the adhesive layer described below.

The gap layer is formed by placement, and there is no particular limitation in the position or order of placement.

### <Lamination Step (S101)>

A method for manufacturing a smart window according to one embodiment of the present disclosure includes step (S101) of preparing the film laminate and laminating the adhesive layer 120-1, 120-2 and the substrate 130-1, 130-2 on one or both surfaces thereof. In one embodiment, the adhesive layer 120-1, 120-2 may be formed on one surface of the surface protective layer 140-1, 140-2 or one surface of the optical laminate 10 by a lamination method.

The lamination step may further include a fixing step before a pre-bonding step. In order to facilitate pre-bonding and main bonding in a state where the film laminate, the adhesive layer and the substrate are laminated, the edges are fixed by taping, etc. This fixing can be done using a conventional or later-developed method, such as a method of inserting a ring that can cover the entire side and fixing the same with a bonding tape.

In addition, the lamination step may further include a subsequent vacuum suction step. In order to stably bond the film laminate and the substrate to each other, a vacuum suction process may be performed. Thereby, a state close to vacuum is created between the film laminate and the substrate, so that air does not enter between the film laminate and the substrate, and thus air bubbles do not occur after bonding or optical distortion does not occur after completion. This vacuum suction process may be performed using a vacuum rubber bag or the like, and a conventional or later-developed method may be used.

### Step of Laminating Adhesive Layer 120-1, 120-2

The adhesive layer 120-1, 120-2 may be formed using an adhesive or a pressure-sensitive adhesive, and preferably has transparency and thermal stability while having an appropriate pressure-sensitive adhesive strength such that peeling or air bubbles do not occur when handling the optical laminate. The adhesive layer may include a conventional or later-developed adhesive film, and the adhesive layer preferably includes a low-temperature curable polyvinyl butyral (PVB) film in terms of stability (glass shattering, and penetration). When the adhesive layer includes the low-temperature curable polyvinyl butyral (PVB) film, it has soft properties even at low temperatures, and thus can absorb the pressure applied to the film laminate, and exhibit a desired initial adhesive strength even when cured at low temperatures. For example, the adhesive layer 120-1, 120-2 may be made of the same material as the polyvinyl butyral (PVB) film included in the surface protective layer and the gap layer in the film laminate, without being limited thereto.

In addition, the adhesive may be a conventional or later-developed adhesive, and for example, may be selected from among a photocurable adhesive, a thermosetting adhesive, and a pressure-sensitive adhesive.

The photocurable adhesive exhibits a strong adhesive force by being crosslinked and cured with active energy rays such as ultraviolet (UV) rays or electron beam (EB), and may be composed of a reactive oligomer, a reactive monomer, a photopolymerization initiator, etc.

The reactive oligomer is an important component that determines the properties of the adhesive, and forms a cured coating film by forming a polymer bond through a photopolymerization reaction. Usable reactive oligomers include polyester-based resins, polyether-based resins, polyurethane-based resins, epoxy-based resins, polyacrylic resins, silicone-based resins, etc.

The reactive monomer acts as a crosslinking agent and a diluent for the above-described reactive oligomer and affects the adhesive properties. Usable reactive monomers include monofunctional monomers, polyfunctional monomers, epoxy-based monomers, vinyl ethers, cyclic ethers, etc.

The photopolymerization initiator acts to initiate photopolymerization by absorbing light energy to generate radicals or cations. An appropriate photopolymerization initiator selected depending on the photopolymerization resin may be used.

The pressure-sensitive adhesive may be a conventional or later-developed pressure-sensitive adhesive. In one or more embodiments, the pressure-sensitive adhesive may be an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, or the like. The pressure-sensitive adhesive is not particularly limited as long as it has adhesive and viscoelastic properties. However, the pressure-sensitive adhesive may preferably be an acrylic pressure-sensitive adhesive from the viewpoint of ease availability, etc., and may include, for example, a (meth)acrylate copolymer, a crosslinking agent, a solvent, and the like.

The crosslinking agent may be a conventional or later-developed crosslinking agent, and may include, for example, a polyisocyanate compound, an epoxy resin, a melamine resin, a urea resin, a dialdehyde, a methylol polymer, etc. Preferably, it may include a polyisocyanate compound.

The solvent may include a solvent commonly used in the field of resin compositions, and examples thereof include alcoholic compounds such as methanol, ethanol, isopropanol, butanol, and propylene glycol methoxy alcohol; ketone-based compounds such as methyl ethyl ketone, methyl butyl ketone, methyl isobutyl ketone, diethyl ketone, and dipropyl ketone; acetate-based compounds such as methyl acetate, ethyl acetate, butyl acetate, and propylene glycol methoxy acetate; cellosolve-based compounds such as methyl cellosolve, ethyl cellosolve, and propyl cellosolve; and hydrocarbon-based compounds such as hexane, heptane, benzene, toluene, and xylene. These solvents may be used alone or in combination of two or more.

The adhesive layer 120-1, 120-2 may include a hot melt-type pressure-sensitive adhesive such as an ethylene vinyl acetate (EVA) film or polyvinyl butyral (PVB) film used for double-sided bonding glass for vehicles. Preferably, the adhesive layer 120-1, 120-2 includes a low-temperature curable polyvinyl butyral (PVB) film that is included in the above-described surface protective layer and/or gap layer.

The thickness of the adhesive layer 120-1, 120-2 may be appropriately determined depending on the type of resin that acts as a pressure-sensitive adhesive, the pressure-sensitive adhesive strength, the environment in which the pressure-sensitive adhesive is used, etc. In one embodiment, the adhesive layer 120-1, 120-2 may have a thickness of 0.01 to 1.5 mm, preferably 0.05 to 1.2 mm, more preferably 0.1 to 1 mm, in order to secure sufficient adhesive strength between the surface protective layer 140 and the substrate 130, or between the optical laminate 10 and the substrate 130, and to minimize the thickness of the smart window. When a polyvinyl butyral (PVB) film is used as a pressure-sensitive adhesive layer, the thickness of the PVB film may vary depending on the intended use and the thickness of the transparent film and/or glass, and a PVB film product having a thickness of 0.38 mm or 0.76 mm may be applied in terms of commercialization.

In one embodiment, the adhesive layer 120 may be formed on one surface of the substrate (glass) by a lamination method.

### Step of Laminating Substrate 130-1, 130-2

The substrate 130-1, 130-2 may be at least one selected from among a glass plate and/or a polymer film that are/is generally transparent and do/does not impair optical properties. Examples of the material of the substrate include polyethylene terephthalate, cyclic olefin polymers, polyethylene naphthalate, polyethersulfone, polycarbonate, cellulose acetate, polymethyl methacrylate, colorless polyimide, glass, ceramics, etc., and among these, glass is most preferably used.

Examples of the glass plate include inorganic glass and organic glass. Examples of the inorganic glass include float plate glass, heat-absorbing plate glass, heat-reflecting plate glass, polished plate glass, figured plate glass, net-reinforced plate glass, wired plate glass, and green glass. The organic glass is synthetic resin glass that is used as a substitute for inorganic glass. Examples of the organic glass include polycarbonate plates and poly(meth)acrylic resin plates manufactured from synthetic resin. Examples of the poly(meth)acrylic resin plates include polymethyl(meth)acrylate plates.

Examples of the substrate include not only glass having an intermediate film sandwiched between two glass plates, but also glass having an intermediate film sandwiched between a glass plate and a PET film, and the substrate may be a glass-resin composite.

The thickness of the substrate is not particularly limited, but is preferably 1.6 mm to 2.1 mm.

The smart window may be manufactured by placing an adhesive film and glass for a vehicle on both surfaces of the optical laminate, followed by pressing with a press machine, or may be manufactured by coating one surface of glass for a vehicle with a resin and then vacuum bonding the glass for a vehicle onto both surfaces of the optical laminate, followed by UV curing. The resin may include an OCR or OCA resin having a storage modulus (G') of 10³ to 10⁵ Pa. The adhesive film may include a hot melt-type adhesive such as an ethylene vinyl acetate (EVA) film or a polyvinyl butyral (PVB) film, and the above-described material of the adhesive layer 20, that is, one selected from among a photocurable adhesive, a thermosetting adhesive, and a pressure-sensitive adhesive, may be applied as is, and thus description thereof will be omitted. It is preferable in terms of the process to use a low-temperature curable adhesive.

In addition, a smart window product for a building may be manufactured by bonding a window for a building onto one or both surfaces of the film laminate, or may be manufactured by bonding glass for a window onto one surface of the film laminate by a lamination method, or may be manufactured by bonding glass for a window onto both surfaces of the film laminate by a UV-curable adhesive applied thereto, followed by UV curing.

### <Pre-Bonding Step (S102)>

Pre-bonding step (S102) is a step of bonding the layers of the film laminate to each other while melting them at a predetermined temperature and vacuum pressure. In this step, glass and the polyvinyl butyral (PVB) film and/or the optical laminate are bonded to each other. The pre-bonding step of the present disclosure may be performed at a pressure of 0.1 to 3 bar, and may include: step (S1) of heating to a temperature of 40 to 90°C; step (S2) of maintaining the temperature of step (S1); and step (S3) of cooling to a temperature of 0 to 30°C.

Specifically, the main bonding step may include: step (S1) of heating to a temperature of 50 to 70°C at a pressure of preferably 0.1 to 1 bar, more preferably 0.1 to 0.92 bar; step (S2) of maintaining the temperature of 50 to 70°C; and step (S3) of cooling to a temperature of 10 to 20°C.

### <Main Bonding Step (S103)>

Main bonding step (S103) is a step of further bonding glass and the film laminate bonded to each other in pre-bonding step (S102) while pressing out the air bubbles generated between them. In the method for manufacturing a smart window, a method of bonding glass is one of the important factors that determine the quality of the smart window. To bond glass to the film laminate, an appropriate bonding method that takes into account the elements included in the film laminate is required. In particular, if a conventional method is used for a laminate including a thin optical laminate, not only mura due to the uneven distribution of the liquid crystals in the liquid crystal layer, but also a haze phenomenon due to optical distortion may occur. If the bonding pressure is simply reduced in order to prevent these problems, a problem arises in that the bonding is not performed properly.

Accordingly, the present disclosure provides a method for manufacturing a smart window, including a main bonding step including an at least two-step process.

In an embodiment of the present disclosure, the main bonding is performed in two or more divided steps, and thus uneven pressure occurring during the bonding process may be eliminated by gradually performing the bonding while changing pressure. Specifically, preferably, when the main bonding includes the following steps a) and b), it is possible to prevent the uneven distribution of the liquid crystals in the liquid crystal layer included in the film laminate, thereby manufacturing a smart window of better quality. Specifically, preferably, when the main bonding includes the following steps a) and b), it is possible to prevent the uneven distribution of the liquid crystals in the liquid crystal layer included in the film laminate, thereby manufacturing a smart window of better quality. In particular, the present disclosure is characterized by suppressing the uneven distribution of liquid crystals by performing first main bonding at a pressure of 3.5 to 10 bar (step a)) and then performing second main bonding at a reduced pressure of 1 to 3 bar (step b)). Compared to a conventional main bonding method in which the uneven distribution of liquid crystals is likely to occur because the bonding is performed in a single step at a high pressure, the present disclosure makes it possible to eliminate the uneven distribution of liquid crystals by performing second main bonding at a reduced pressure (step b)). Meanwhile, if the main bonding is performed using only low pressure from the beginning, sufficient bonding may not be achieved and it is also difficult to remove air bubbles. Thus, it may be more appropriate to perform the bonding at high pressure at the beginning and reduce the pressure to low pressure at the end.

### Step a) of maintaining a laminate resulting from the pre-bonding step at a pressure of 3.5 to 10 bar for 15 to 60 minutes (S103-1)

In step a), the temperature is controlled in an autoclave, and pressurization is performed by a compressor so that bonding is completed by heating and pressurization. Specifically, step a) may be performed preferably at 50 to 110°C, more preferably at 80 to 100°C. In addition, it is more preferable that step a) of the main bonding process, which is divided into two or more steps, be performed by maintaining a laminate resulting from the pre-bonding step in a chamber at 3.5 to 6 bar for 20 to 40 minutes while satisfying the above temperature range. Specifically, if the temperature rises to 140°C, which is a conventional bonding temperature, a problem may arise in that the optical laminate may not withstand the temperature and the optical laminate may discolor. Thus, it is preferable that step a) be performed in the above temperature range, unlike the case of general bonded glass. Specifically, since the optical laminate including liquid crystals injected therein is included for manufacturing, it is most sensitive to pressure, and if compressed air with a high pressure exceeding the upper limit of the above range is injected, a problem may arise in that the uneven distribution of liquid crystals occurs due to uneven pressure during bonding.

### Step b) of maintaining a laminate resulting from step a) at a reduced pressure of 1 bar to 3 bar for 70 to 100 minutes (S103-2)

In step b) following step a), bonding is further performed at a reduced pressure so that the pressure applied to the liquid crystals included in the film laminate is not uneven. Specifically, step b) may be performed preferably at 50 to 110°C, more preferably at 80 to 100°C. In addition, it is preferable to maintain a laminate resulting from step a) at a reduced pressure of 1 to 2 bar for 80 to 100 minutes. While high pressure is applied to remove air bubbles in step a), step b) is a step of eliminating uneven pressure by reduction to a low pressure, and thus the uneven distribution of liquid crystals that would occur in step a), which is performed at a relatively high pressure, is effectively eliminated through step b).

That is, the main bonding in the present disclosure is a method of a) performing bonding at a high pressure at the beginning, and then b) applying a low pressure for a long time to eliminate the uneven distribution of liquid crystals, so that the liquid crystals included in the optical laminate are evenly distributed and the substrate is stably bonded to the film laminate. That is, unlike the main bonding in conventional technology, the main bonding in the present disclosure is performed in two steps, and thus it is possible to manufacture a smart window with high reliability and significantly reduced liquid crystal mura defects.

### <Smart Window>

The present disclosure includes a smart window manufactured according to the above-described method for manufacturing a smart window.

FIGS. 2a and 2b show a smart window manufactured by the method for manufacturing a smart window according to one embodiment of the present disclosure. Referring to FIG. 2a, the smart window may be a laminate in which the adhesive layer 120-1, 120-2 and the substrate 130-1, 130-2 are disposed on both surfaces of a film laminate including the optical laminate 10, the gap layer 150, and the surface protective layer 140.

In addition, the present disclosure may relate to a means of transportation including the smart window, for example, an automobile in which the smart window is applied to at least one of a front window, a rear window, a side window, a sunroof window, and an interior partition. The present disclosure may include a wearable device and a window for a building including the smart window.

For example, the smart window of the present disclosure, which is included in an automobile, may be manufactured by bonding a substrate (glass) onto both surfaces of an optical laminate including a polarizing plate, a transparent conductive layer, a liquid crystal layer, and a pressure-sensitive adhesive/adhesive layer. For example, the smart window may be manufactured by placing an adhesive film and a substrate (glass) on both surfaces of the optical laminate, followed by heating at a temperature of 90°C and a pressure of about 1 bar for 10 to 20 minutes using a press machine, wherein the adhesive layer may include an EVA film, a PVB film, or the like, without being limited thereto.

Hereinafter, experimental examples including specific examples and comparative examples will be presented to help understanding of the present disclosure, but these examples are only illustrative of the present disclosure and do not limit the scope of the present disclosure as defined by appended claims. It will be apparent to those skilled in the art that various changes and modifications to the examples are possible without departing from the scope and technical idea of the present disclosure, and it should be understood that such changes and modifications fall within the scope of the appended claims. "%" and "parts" in the examples mean "mass%" and "parts by mass", respectively, unless otherwise specified.

Hereinafter, embodiments of the present disclosure will be described in more detail. Terms used in the present specification are for the purpose of describing embodiments and are not intended to limit the present disclosure.

### Preparation Example 1: Step (S100) of Preparing Film Laminate Including Optical Laminate

A 60-µm-thick polyvinyl alcohol film (raw film) (manufactured by Kuraray Co., Ltd., trade name: Kurare Poval Film VF-PE#6000, average degree of polymerization: 2,400, degree of saponification: 99.9 mol%) was continuously unwound from a raw film roll, conveyed, and dipped in a swelling bath containing pure water at 20°C for 30 seconds. In this swelling treatment process, roll-to-roll stretching (longitudinal uniaxial stretching) was performed by creating a difference in peripheral speed between the nip rolls The stretching ratio with respect to the raw film was set to 2.5 times. Next, dyeing, crosslinking, color complementation, cleaning, drying and bonding treatment processes were performed according to conventional technology, thereby producing polarizing plates.

A composition for forming a hard coating layer prepared by mixing 16.2 g of a dendrimer compound (Miwon Specialty Chemical Co., Ltd., SP-1106), 14.4 g of inorganic nanoparticles (50 wt% of silica particles with an average particle diameter of 10 nm to 20 nm; solvent: methyl ethyl ketone (MEK)), 1.8 g of a polyfunctional (meth)acrylate compound containing an ethylene glycol group, 0.7 g of a photoinitiator (1-hydroxycyclohexyl phenyl ketone), and 2.9 g of methyl ethyl ketone was was applied by Mayer bar coating to one surface of each of the first and second polarizing plates (produced as described above) to a calculated hard coating thickness (determined after adjusting the solid content and curing), dried at 80°C for 5 minutes, and then cured with a high-pressure mercury lamp at a light dose of 500 mJ/cm².

A PEDOT composition was applied to one surface of each of the produced first and second polarizing plates, and dried at 90°C for about 5 to 10 minutes to form transparent conductive layers, each having a thickness of 200 nm, thereby manufacturing a laminate including first and second transparent conductive layers formed of a conductive polymer (PEDOT) on the surfaces of the polarizing plates, respectively. The PEDOT composition was prepared by mixing coating solution 1 and coating solution 2 at a ratio of 1:1. The coating solution 1 was a mixture of, based on the total weight of the coating solution, 60 to 65 wt% of an ethenyl benzenesulfonic acid homopolymer compound with 2,3-dihydrothieno[3,4-b]-1,4-dioxin homopolymer (water based), 15 to 20 wt% of ethyl alcohol, and 20 to 25 wt% of deionized water, and coating solution 2 was a mixture of, based on the total weight of the coating solution, 0.5 to 1.0 wt% of a polyester resin (solid content: 25%, water based), 65 to 75 wt% of ethyl alcohol, and 20 to 25 wt% of deionized water.

The surfaces of the first and second transparent conductive layers formed on the polarizing plates, respectively, were coated with an alignment solution which was then dried (80°C/2 minutes). Next, the dried alignment solution was irradiated with UV light, thereby forming a first alignment film and a second alignment film.

A sealant (UVF-006, 70,000 mPa·s, SEKISUI Co., Ltd.) was applied to the formed first transparent layer using a sealant dispenser (SHOTmini 200Ωx, MUSASHI Co., Ltd.) with a sharp needle (SPN-0.25-12.7L) at a discharge pressure of 200 mPa according to the product size drawing, and liquid crystals were injected onto the first alignment film using the ODF process. Thereafter, in a state in which the polarizing axes of the first and second polarizing plates were arranged at at 0° or 90° with each other, the polarizing plates were bonded to each other at a pressure of 3 kg/cm², and then UV curing (500 mJ/cm²) was performed along the sealant line, thereby manufacturing an optical laminate for a smart window. Next, a conductive copper tape (TERAOKA, No. 8323) was attached and connected to the first transparent layer and the second transparent conductive layer.

As a method for forming and laminating a surface protective layer, a 0.05-mm-thick low-temperature curable polyvinyl butyral (PVB) film (tensile modulus at 60°C: 1.9×10⁹ Pa, tensile modulus at 90°C: 4×10⁶ Pa, and melt flow rate (MFR) measured at 140°C according to ASTM D1238: 0.02 g/10 min or less) was cut to a size that could cover the entire surface of glass (substrate), thereby preparing a surface protective layer. The thicknesses of the surface protective layer and the gap layer in each of Examples, Comparative Examples, and Reference Examples are shown in Table 2 below.

A 0.38-mm-thick low-temperature curable polyvinyl butyral (PVB) film (0.38 mm thick, visible light transmittance (Tv) according to ISO 9050: 88.8% or more, UV transmittance (Tuv): 0.6% or less, thermal conductivity: 0.2 W/mK at 23 to 50°C) and/or a 0.05-mm-thick low-temperature curable polyvinyl butyral (PVB) film (tensile modulus at 60°C: 1.9×10⁹ Pa, tensile modulus at 90°C: 4×10⁶ Pa, and melt flow rate (MFR) measured at 140°C according to ASTM D1238: 0.02 g/10 min or less) were/was additionally placed at ends of the optical laminate (0.39-mm-thick) to form a gap layer having a thickness larger than that of the optical laminate. To form the gap layer, the PVB film was cut to a size that could cover the peripheral area of glass (substrate) excluding the size of the optical laminate and was placed. The thickness and number of the PVB films used to form the gap layer in each of Examples, Comparative Examples, and Reference Examples are shown in Table 2 below.

### Preparation Example 2: Lamination Step (S101)

A second substrate (glass), a second adhesive layer, the film laminate (prepared according to Preparation Example 1), a first adhesive layer, and a first substrate (glass) were sequentially laminated. As the first adhesive layer and the second adhesive layer, a 0.38-mm-thick low-temperature curable polyvinyl butyral (PVB) film (visible light transmittance (Tv) according to ISO 9050 standard: 88.8% or more, UV transmittance (Tuv): 0.6% or less, thermal conductivity: 0.2 W/mK at 23 to 50°C, specific heat capacity: 1.9 KJ/Kg·K at 20°C and 2.3 KJ/Kg·K at 100°C) was used, and as the first substrate and the second substrate, 2.1T soda lime glass was used.

### Preparation Step 3: Pre-Bonding Step (S102)

The laminate obtained in the lamination step was placed in a reusable vacuum rubber bag (OBRJ-S) and subjected to pre-bonding. In the case of Example 1, the pre-bonding step included a step of placing the laminate in the vacuum rubber bag, then increasing the temperature from 20°C to 65°C for 15 minutes at a pressure of 0.9 bar, and then maintaining the laminate at 65°C for 30 minutes, and a subsequent step of decreasing the temperature from 65°C to 20°C for 15 minutes. In addition, the pressure, temperature, and time conditions of the pre-bonding step in each of Examples, Comparative Examples, and Reference Examples are shown in Table 2 below.

### Preparation Example 4: Main Bonding Step (S103)

After completion of the pre-bonding, main bonding (autoclave) was performed. In the case of Example 1, main bonding was performed after creating the condition of autoclave as follow: by maintaining the laminate resulting from the pre-bonding step at an elevated temperature of 90°C at a pressure of 5 bar for 30 minutes, and then maintaining the laminate at a reduced pressure of 1.5 bar for 90 minutes while maintaining the temperature of 90°C. The pressure, temperature, and time conditions of the main bonding step in each of Examples, Comparative Examples, and Reference Examples are shown in Table 2 below.

### Examples and Comparative Examples

With reference to Preparation Examples 1 to 4, smart windows according to the present disclosure were manufactured as shown in Table 2 below.

**[Table 2]**

| No. | | Elements | | Pre-bonding conditions (vacuum bag) | | | Main bonding conditions (autoclave) | | |
|---|---|---|---|---|---|---|---|---|---|
| | | Surface protective layer | Gap layer | Pressure (bar) | Temp. (°C) | Time (min) | Pressure (bar) | Temp. (°C) | Time (min) |
| Example | 1 | PVB film 0.05 mm x 1 | PVB film 0.05 mm + PVB film 0.38 mm | 0.9 | 20/65/2 0 | 15/30/15 | 5→ 1.5 | 90 | 30/90 |
| | 2 | PVB film 0.05 mm x 1 | PVB film 0.05 mm + PVB film 0.38 mm | 0.6 | 20/65/2 0 | 15/30/15 | 5→ 1.5 | 90 | 30/90 |
| | 3 | PVB film 0.10 mm x 1 | PVB film 0.05 mm + PVB film 0.38 mm | 0.9 | 20/65/2 0 | 15/30/15 | 5→1.5 | 80 | 30/90 |
| | 4 | PVB film 0.25 mm x 1 | PVB film 0.05 mm + PVB film 0.38 mm | 0.9 | 20/65/2 0 | 15/30/15 | 5→1.5 | 80 | 30/90 |
| | 5 | PVB film 0.05 mm x 1 | PVB film 0.05 mm x 8 | 0.9 | 20/60/2 0 | 15/30/15 | 5→1.5 | 80 | 30/90 |
| | 6 | PVB film 0.05 mm x 1 | PVB film 0.05 mm + PVB film 0.38 mm | 0.9 | 20/60/2 0 | 15/30/15 | 5→1.5 | 80 | 30/90 |
| Comp. Example | 1 | PVB film 0.05 mm x 1 | PVB film 0.38 mm | 0.9 | 20/70/7 0 | 15/30/15 | 5 | 80 | 30 |
| | 2 | PVB film 0.05 mm x 1 | PVB film 0.05 mm + PVB film 0.38 mm | 0.9 | 20/60/2 0 | 15/30/15 | 5 | 80 | 30 |
| | 3 | PVB film 0.05mm x 1 | PVB film 0.38mm | 0.9 | 20/70/7 0 | 15/30/15 | 5→ 4 | 80 | 30 |
| Ref. Example | 1 | x | PVB Film 0.05mm + PVB film 0.38 mm | 0.9 | 20/60/2 0 | 15/30/15 | 5→ 1.5 | 80 | 30/90 |
| | 2 | PVB film 0.7 6mm x 1 +0.38 mm x 1 | PVB film 0.05 mm + PVB film 0.38 mm | 0.9 | 20/60/2 0 | 15/30/15 | 5→ 1.5 | 80 | 30/90 |
| | 3 | PVB film 0.05 mm x 1 | PVB film 0.05 mm x 7 | 0.9 | 20/60/2 0 | 15/30/15 | 5→ 1.5 | 80 | 30/90 |
| | 4 | PVB film 0.05 mm x 1 | PVB film 0.05 mm x 9 | 0.9 | 20/60/2 0 | 15/30/15 | 5→ 1.5 | 80 | 30/90 |

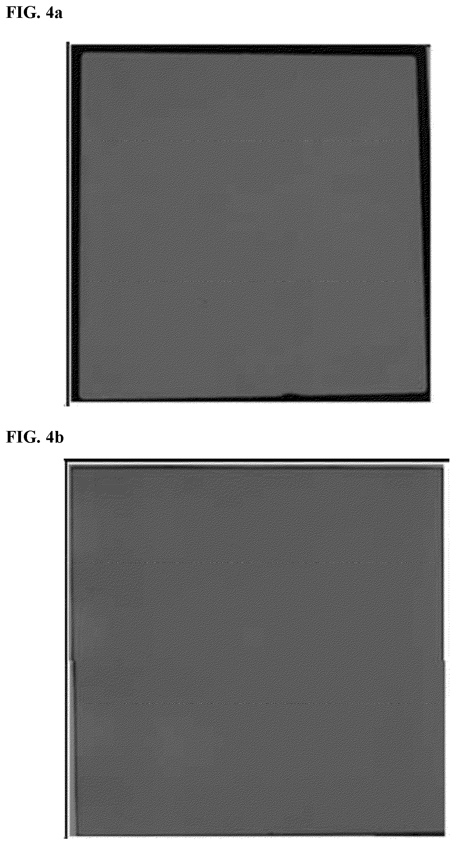

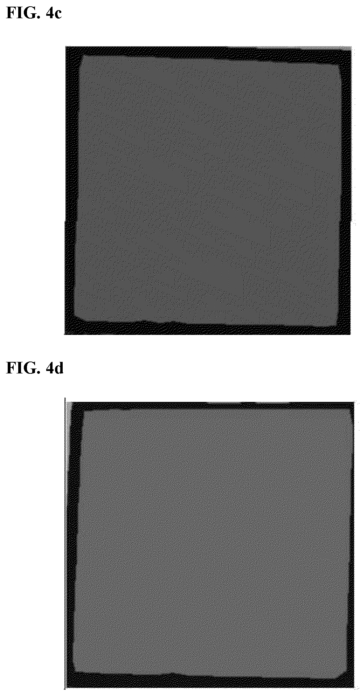

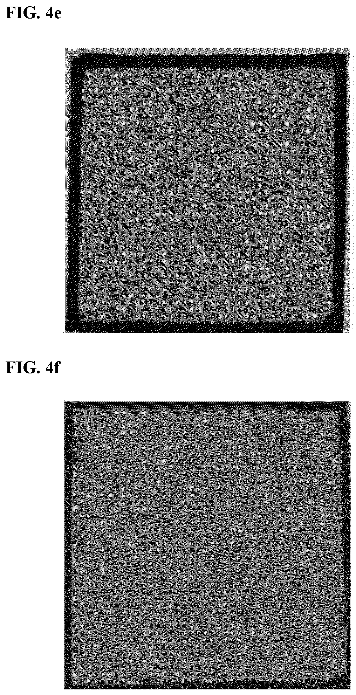

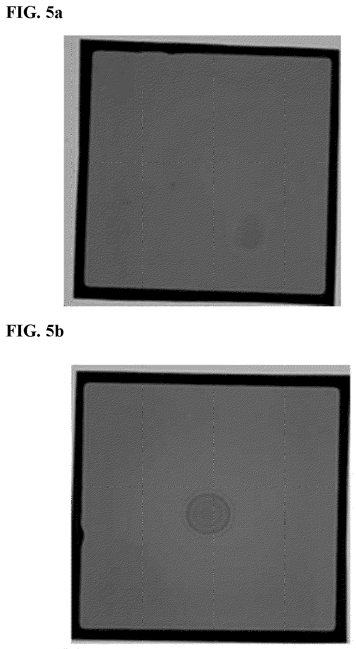

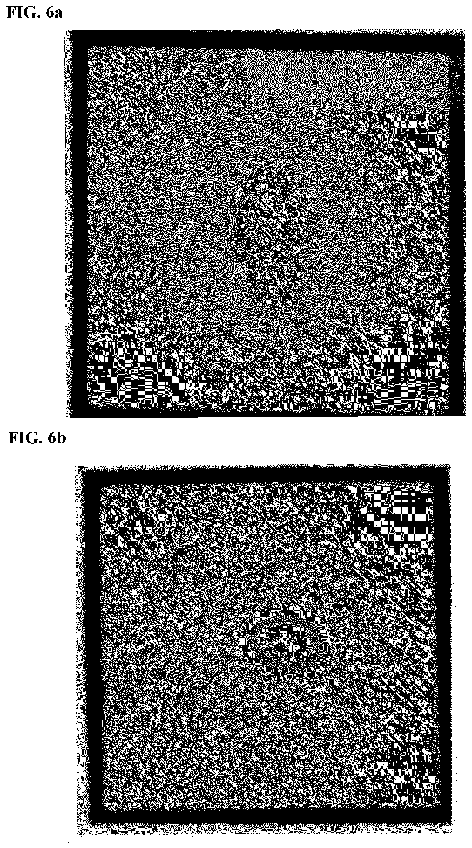

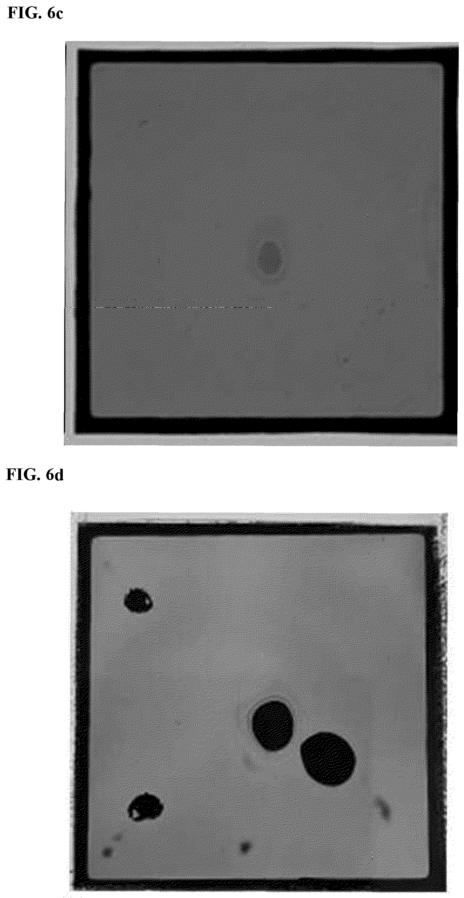

Table 3 below and FIGS. 4a to 4f, 5a, 5b, and 6a to 6d show the results of visually observing and evaluating the liquid crystal mura (a general term for a state in which the screen characteristics of a liquid crystal panel manufactured are not uniform and defective) of the smart windows manufactured according to Table 2 above. FIGS. 4a to 4f are photographs of smart windows of Examples 1 to 6 of the present disclosure on backlight plates (light sources), respectively, taken using a digital camera to evaluate the appearance thereof. FIGS. 5a and 5b are photographs of smart windows of Comparative Examples 1 and 2 of the present disclosure on backlight plates (light sources), respectively, taken using a digital camera to evaluate the appearance thereof. FIGS. 6a to 6d are photographs of smart windows of Reference Examples 1 to 4 of the present disclosure on backlight plates (light sources), respectively, taken using a digital camera to evaluate the appearance thereof.

**[Table 3]**

| No. | | Evaluation results |
|---|---|---|
| Example | 1 | Absence of liquid crystal mura |
| | 2 | Absence of liquid crystal mura |
| | 3 | Absence of liquid crystal mura |
| | 4 | Absence of liquid crystal mura |
| | 5 | Absence of liquid crystal mura |
| | 6 | Absence of liquid crystal mura |
| Comparative Example | 1 | Presence of liquid crystal mura in central portion |
| | 2 | Presence of liquid crystal mura in central portion |
| | 3 | Presence of liquid crystal mura in central portion |
| Reference Example | 1 | Presence of liquid crystal mura in central portion |
| | 2 | Presence of liquid crystal mura in central portion |
| | 3 | Presence of liquid crystal mura in central portion |
| | 4 | Occurrence of black spots |

Referring to Tables 2 and 3 above, it can be seen that, when the smart window was manufactured using the manufacturing method of the present disclosure, no liquid crystal mura occurred even after bonding the substrate, and no defective products that could not be operated due to black spots occurred.

On the other hand, it can be confirmed that, in the case of Comparative Examples 1 and 2 in which the manufacturing method of the present disclosure was not used and a pressure of 5 bar was maintained in the main bonding step, liquid crystal mura occurred.

In addition, in the case of Comparative Example 3 in which the pressure was reduced to only 4 bar in step b) during the main bonding step, liquid crystal mura occurred even though the main bonding was performed in two steps, because the pressure was not low enough and there was no step of eliminating the uneven distribution of liquid crystals.

## Claims

1. A method for manufacturing a smart window, comprising:
a step of laminating a film laminate comprising an optical laminate, an adhesive layer, and a substrate;
a pre-bonding step; and
a main bonding step,
wherein the main bonding step comprises:
step a) of maintaining a laminate resulting from the pre-bonding step at a pressure of 3.5 to 10 bar for 15 to 60 minutes; and
step b) of maintaining a laminate resulting from step a) at a reduced pressure of 1 bar to 3 bar for 70 to 100 minutes.

2. The method of claim 1, wherein steps a) and b) are performed at a temperature of 50 to 110°C.

3. The method of claim 1 or 2, wherein step a) is performed at a pressure of 3.5 to 6 bar.

4. The method of one of claims 1 to 3, wherein step b) is performed at a pressure of 1 to 2 bar.

5. The method of one of claims 1 to 4, wherein the pre-bonding step is performed at a pressure of 0.1 to 3 bar and comprises:
step S1) of heating to a temperature of 40 to 90°C;
step S2) of maintaining the temperature of S1); and
step S3) of cooling to a temperature of 0 to 30°C.

6. The method of one of claims 1 to 5, further comprising a step of manufacturing the film laminate comprising an optical laminate,
wherein the step of manufacturing the film laminate comprises a step of forming a gap layer at ends of the optical laminate.

7. The method of claim 6, wherein the gap layer has a storage modulus (G') of 10³ to 10⁶ kPa at 60°C and a storage modulus (G') of 5×10² to 5×10³ kPa at 100°C, and is formed to have a thickness larger than that of the optical laminate.

8. The method of claim 6 or 7, wherein the step of manufacturing the film laminate comprises a step of laminating a surface protective layer on at least one of upper and lower surfaces of the optical laminate.

9. The method of claim 8, wherein the surface protective layer is a low-temperature curable polyvinyl butyral (PVB) film that is cured at a temperature of 90°C or lower, and has a tensile modulus (E') of 10⁸ to 10¹⁰ Pa at 60°C and 10⁶ to 10⁷ Pa at 90°C.

10. The method of claim 8, wherein the surface protective layer comprises a polyvinyl butyral (PVB) film which has no flowability at 100°C or lower under a load of 21.6 kg, and has a melt flow rate (MFR) of 0.02 g/10 min or less, as measured according to ASTM D1238 at 140°C under a load of 2.16 kg.

11. A smart window manufactured by the method of any one of claims 1 to 10, the smart window comprising an optical laminate, wherein the optical laminate comprises:
a first polarizing plate;
a first transparent conductive layer formed on an inner surface of the first polarizing plate;
a second polarizing plate opposite to the first polarizing plate;
a second transparent conductive layer formed on an inner surface of the second polarizing plate and opposite to the first transparent conductive layer;
a liquid crystal layer provided between the first transparent conductive layer and the second transparent conductive layer; and
an alignment film formed between the transparent conductive layer and the liquid crystal layer,
wherein at least one of the first transparent conductive layer and the second transparent conductive layer is formed in direct contact with the first polarizing plate or the second polarizing plate.
